# FASCICULE DE BREVET EUROPEEN

(11) **EP 4 004 661 B1**
(45) Date de publication et mention de la délivrance du brevet: **06.09.2023**
(21) Numéro de dépôt: 20735640.3
(22) Date de dépôt: 08.07.2020
(51) Int. Cl.: G05B 19/4093, C03B 33/037

(54) **PROCÉDÉ ET SYSTÈME DE GÉNÉRATION D'UN PLAN DE DÉCOUPE D'UN PRODUIT VERRIER COMPLEXE**
VERFAHREN UND SYSTEM ZUR ERZEUGUNG EINES SCHNEIDPLANS FÜR EIN KOMPLEXES GLASPRODUKT
METHOD AND SYSTEM FOR GENERATING A CUTTING PLAN FOR A COMPLEX GLASS PRODUCT

(30) Priorité: 26.07.2019 FR 1908551
(43) Date de publication de la demande: 01.06.2022
(73) Titulaire: Saint-Gobain Glass France, 92400 Courbevoie (FR)
(72) Inventeur: VAN LANDEGHEM, Maxime, 94120 Fontenay sous Bois (FR)
(74) Mandataire: Saint-Gobain Recherche
(86) Numéro de dépôt international: PCT/EP2020/069263
(87) Numéro de publication internationale: WO 2021/018534

(56) Documents cités:
- WO-A1-2007/057463
- WO-A1-2014/083371

## Description

### Arrière-plan de l'invention

L'invention se situe dans le domaine technologique de la découpe des produits verriers. Dans ce document, on appelle « produit verrier », tout produit comportant au moins une feuille de verre.

L'invention concerne plus particulièrement un procédé de génération d'un plan de découpe d'un produit verrier prenant en compte les éventuels défauts présents dans des feuilles de verre.

Le document WO 2014/083371 de la Demanderesse décrit un tel procédé. En résumé et de façon générale, ce procédé décrit un procédé pour générer un plan de découpe d'une feuille de verre dans lequel :
- on détecte la présence de défauts dans un ruban de verre avant de le découper en feuilles ;
- on identifie chaque feuille de verre par un identifiant unique, par exemple sous forme d'un code-barres ;
- on détermine un critère de sévérité de chacun des défauts ;
- on génère une cartographie d'attributs pour chaque feuille de verre, les attributs d'une feuille de verre comprenant la position des défauts et leurs critères de sévérité ;
- on enregistre les cartographies d'attributs des différentes feuilles de verre dans une base de données ;
- on permet à un utilisateur de retrouver tout ou partie de la cartographie des attributs d'une feuille de verre donnée ;
- on génère un plan de découpe optimisé de cette feuille de verre en utilisant au moins une partie de la cartographie d'attributs de cette feuille.

Ce procédé est très avantageux, mais il ne permet pas d'optimiser le plan de découpe d'un produit verrier complexe, par exemple d'un verre feuilleté.

En particulier, dans les procédés actuels de découpe d'un produit verrier complexe, les défauts pris en compte pour générer le plan de découpe sont pris en compte après l'assemblage du produit verrier et aucune distinction n'est faite entre les défauts provenant des feuilles de verre et ceux provenant des autres éléments constitutifs du produit verrier complexe. Ainsi tous les défauts sont traités de la même manière, comme ceux des feuilles de verre : aucun trait de découpe ne peut passer par ces défauts, y compris dans leur zone d'exclusion. Il en résulte alors des pertes inutiles lors de la découpe.

On rappelle qu'une zone d'exclusion d'un défaut dans une feuille de verre est une zone autour du défaut telle que si un trait de découpe la traversait, la découpe serait erratique ou engendrerait la casse du morceau de verre concerné.

En traitant tous les défauts de la même manière, les procédés de découpe de l'état de la technique définissent implicitement des zones d'exclusion autour des défauts des autres éléments constitutifs du produit verrier complexe, notamment autour des défauts des feuilles intercalaires dans le cas du verre feuilleté.

Par exemple, même à supposer que l'on possède la cartographie des défauts de chaque feuille de verre et la cartographie des défauts d'une feuille intercalaire en butyral de polyvinyle (PVB) pour la fabrication d'un verre feuilleté, la Demanderesse a constaté qu'un procédé de génération de plan de découpe qui prend en entrée une cartographie des défauts du du verre feuilleté obtenue par simple superposition de ces cartographies génère beaucoup de pertes inutiles.

La présente invention vise un procédé de génération d'un plan de découpe d'un produit verrier complexe amélioré.

### Objet et résumé de l'invention

Plus précisément, l'invention concerne un procédé de génération d'un plan de découpe d'un produit verrier complexe comportant au moins une feuille de verre et au moins une couche autre qu'une feuille de verre, ce procédé comportant :
- une étape d'obtention d'une cartographie des défauts de ladite au moins une feuille de verre;
- une étape d'obtention d'au moins une autre cartographie de défauts, les défauts de ladite au moins une autre cartographie n'étant pas des défauts d'une feuille de verre ;

chacune des cartographies comportant pour chacun de ses défauts, une position du défaut, une taille dudit défaut, et un niveau de criticité dudit défaut ;
   - une étape de génération d'un plan de découpe du produit verrier complexe au moins à partir de ces cartographies et d'un cahier des charges prenant en compte les niveaux de criticité des défauts, le plan de découpe comportant au moins un trait de découpe et étant tel qu'aucun des traits de découpe ne passe par une zone d'exclusion d'un défaut d'une feuille de verre,
le procédé étant caractérisé en ce qu'il autorise qu'au moins un trait de découpe passe par une zone d'exclusion d'un défaut de l'autre cartographie.

Corrélativement, l'invention concerne un système de génération d'un plan de découpe d'un produit verrier complexe comportant au moins une feuille de verre et au moins une couche autre qu'une feuille de verre, ce système comportant :
- un module d'obtention d'une cartographie des défauts de ladite au moins une feuille de verre;
- un module d'obtention d'au moins une autre cartographie de défauts, les défauts de ladite au moins une autre cartographie n'étant pas des défauts d'une feuille de verre ;

chacune de ces cartographies comportant pour chacun de ses défauts, une position dudit défaut, une taille dudit défaut, et un niveau de criticité dudit défaut ;
   - un module de génération d'un plan de découpe dudit produit verrier complexe au moins à partir desdites cartographies et d'un cahier des charges prenant en compte lesdits niveaux de criticité, ledit plan de découpe comportant au moins un trait de découpe et étant tel qu'aucun desdits traits de découpe ne passe par une zone d'exclusion d'un dit défaut de ladite au moins une feuille de verre,
ledit système étant caractérisé en ce que ledit module de génération autorise qu'au moins un desdits traits de découpe passe par une zone d'exclusion d'un défaut de ladite autre cartographie.

Ainsi, et d'une façon générale le procédé et le système de génération d'un plan de découpe selon l'invention propose de relâcher certaines contraintes de découpe en autorisant que des traits de découpe passent par des zones d'exclusion de défauts autres que ceux des feuilles de verre.

L'invention propose ainsi de considérer que certains défauts, autres ceux que ceux des feuilles de verre peuvent être non critiques pour le positionnement des traits de découpe. Dans un mode particulier de réalisation, l'invention accepte que tous les défauts répertoriés dans une cartographie autre qu'une cartographie de feuille de verre puissent être traversés par un trait de découpe, quel que soit leur niveau de criticité.

La couche autre qu'une feuille de verre peut par exemple être un revêtement formé d'une ou plusieurs couches minces. De façon connue, il est en effet classique de munir une feuille de verre d'un ou plusieurs revêtements lui conférant des propriétés particulières, notamment des propriétés optiques particulières, par exemple de réflexion ou d'absorption de rayonnements d'un domaine de longueurs d'onde données, des propriétés de conduction électrique, ou encore des propriétés liées à la facilité de nettoyage ou à la possibilité pour le substrat de s'auto-nettoyer. Ces revêtements sont généralement des empilements de couches minces à base de composés inorganiques, notamment de métaux, d'oxydes, de nitrures ou de carbures. Au sens de l'invention, on appelle couche mince, une couche dont l'épaisseur est inférieure à un micromètre et varie généralement de quelques dixièmes de nanomètres à quelques centaines de nanomètres (d'où le qualificatif de "mince").

Le procédé de génération d'un plan de découpe selon l'invention autorise par conséquent que des traits de découpe passent par des défauts détectés sur de telles couches minces.

Dans un mode particulier de réalisation, le produit verrier complexe comporte au moins deux feuilles de verre et ladite au moins une couche est une couche intercalaire entre les deux dites couches de verre, par exemple en matière plastique, par exemple en butyral de polyvinyle (PVB)

Le procédé de génération d'un plan de découpe selon l'invention autorise par conséquent que des traits de découpe passent par des défauts détectés dans une telle couche intercalaire.

Dans un mode particulier de réalisation, les défauts de l'autre cartographie sont des défauts apparus lors de la fabrication dudit produit verrier complexe.

Le procédé de génération d'un plan de découpe selon l'invention autorise par conséquent que des traits de découpe passent par des défauts détectés lors de l'assemblage du produit verrier complexe.

Dans un mode particulier de réalisation, le plan de découpe est généré à partir d'une cartographie du produit verrier complexe obtenue par combinaison de ladite cartographie des défauts de ladite au moins une feuille de verre et de ladite autre cartographie.

Dans un mode particulier de réalisation, le procédé selon l'invention comporte une étape de mémorisation de la cartographie du produit verrier complexe dans un réseau, par exemple dans un réseau en nuage.

Dans un mode de réalisation, lorsque la couche est une couche intercalaire, par exemple en matière plastique, par exemple en PVB, le procédé comporte une étape de découpe d'un rouleau pour obtenir cette couche intercalaire et la cartographie des défauts de cette couche intercalaire est obtenue à partir d'une cartographie des défauts du rouleau.

Dans un mode de réalisation, le procédé comporte :
- une étape de lecture d'un identifiant unique du rouleau ; et
- une étape de téléchargement de la cartographie des défauts du rouleau à partir d'une base de données indexée par cet identifiant.

Dans un mode de réalisation, le procédé comporte :
- une étape de lecture d'un identifiant unique de ladite au moins une feuille de verre ; et
- une étape de téléchargement de ladite cartographie des défauts de ladite au moins une feuille de verre à partir d'une base de données indexée par ledit identifiant.

Dans un mode de réalisation, le rouleau comporte des moyens de repérage aptes à permettre la détermination de la longueur d'une couche intercalaire déroulée à partir du rouleau et le procédé comporte :
- une étape de lecture des moyens de repérage pour dérouler le rouleau de manière à découper la couche intercalaire selon une longueur déterminée ;
la cartographie des défauts de la couche intercalaire étant obtenue à partir de la carte des défauts dudit rouleau et des moyens de repérage.

De tels moyens de repérage sont connus par l'homme du métier de la vélocimétrie. Ils permettent de déterminer précisément la longueur et la vitesse de déroulement ou de défilement de matériaux en bande. On connaît notamment des vélocimètres optiques, par exemple de types laser de surface.

Dans un mode de réalisation, ces moyens de repérage sont constitués par une roue codeuse.

Dans un mode de réalisation, le rouleau comporte un marquage le long d'un bord de chute du rouleau, et le procédé comporte :
- une étape de lecture de ce marquage ;
- une étape de recalage d'un repère de la cartographie des défauts de ladite au moins une feuille de verre et de la cartographie des défauts de la couche intercalaire en utilisant ce marquage.

Dans un mode particulier de réalisation, les différentes étapes du procédé de génération d'un plan de découpe selon l'invention sont déterminées par des instructions de programmes d'ordinateurs.

En conséquence, l'invention vise aussi un programme d'ordinateur, sur un support d'informations, ce programme comportant des instructions adaptées à la mise en oeuvre des étapes d'un procédé de génération d'un plan de découpe selon l'invention.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou système capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 représente un produit verrier complexe;
[Fig. 2A-2D] les figures 2A à 2D représentent des cartographies pouvant être utilisées dans des modes particuliers de réalisation de l'invention;
[Fig. 3] la figure 3 représente un rouleau de matière plastique PVB pouvant être utilisé dans un mode particulier de réalisation de l'invention;
[Fig. 4] la figure 4 représente sous forme d'organigramme les principales étapes d'un procédé de génération d'un plan de découpe conforme à un mode particulier de réalisation de l'invention ; et
[Fig. 5] la figure 5 représente un système de génération d'un plan de découpe conforme à l'invention.

### Description détaillée de modes de réalisation de l'invention

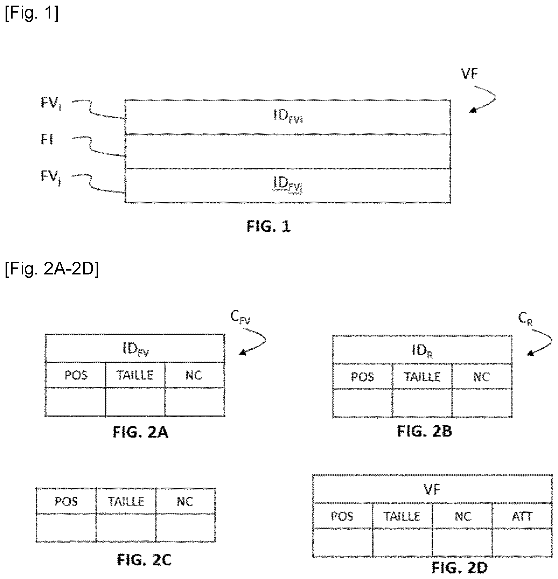

La figure 1 représente un produit verrier complexe au sens de l'invention. Dans l'exemple de la figure 1 ce produit verrier complexe est un verre feuilleté VF comportant deux feuilles de verre FVi, FVj et une couche intercalaire FI en matière plastique PVB.

Chaque feuille de verre FVᵢ comporte un identifiant unique ID_{FVi} marqué sur la feuille de verre.

La figure 2A représente un exemple de cartographie des défauts C_{FV} d'une feuille de verre d'identifiant ID_{FV}. Cette cartographie C_{FV} comporte pour chacun des défauts de la feuille de verre, une position POS du défaut dans un repère propre à cette feuille de verre, une taille TAILLE du défaut, et un niveau de criticité NC dudit défaut.

Dans l'exemple de réalisation décrit ici, ces cartographies de défaut de feuilles de verre sont stockées dans une base de données BD_{CFV} indexée par les identifiants des feuilles de verre.

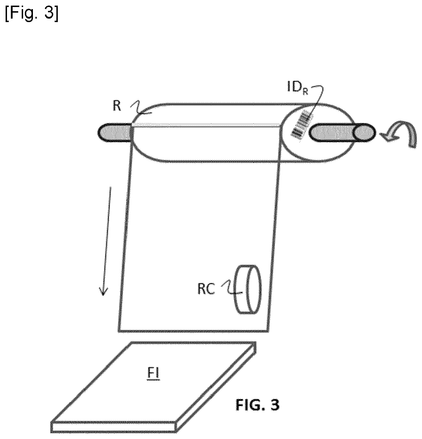

La figure 3 représente un rouleau R de matière plastique PVB. Ce rouleau comporte un identifiant unique ID_{R} et une roue codeuse RC.

La figure 2B représente un exemple de cartographie des défauts C_{R} du rouleau d'identifiant ID_{R}. Cette cartographie C_{R} comporte pour chacun des défauts du rouleau, une position POS du défaut dans un repère propre à ce rouleau, une taille TAILLE du défaut, et un niveau de criticité NC dudit défaut.

Dans l'exemple de réalisation décrit ici, ces cartographies de défaut de rouleaux sont stockées dans une base de données BD_{R} indexée par les identifiants de rouleaux.

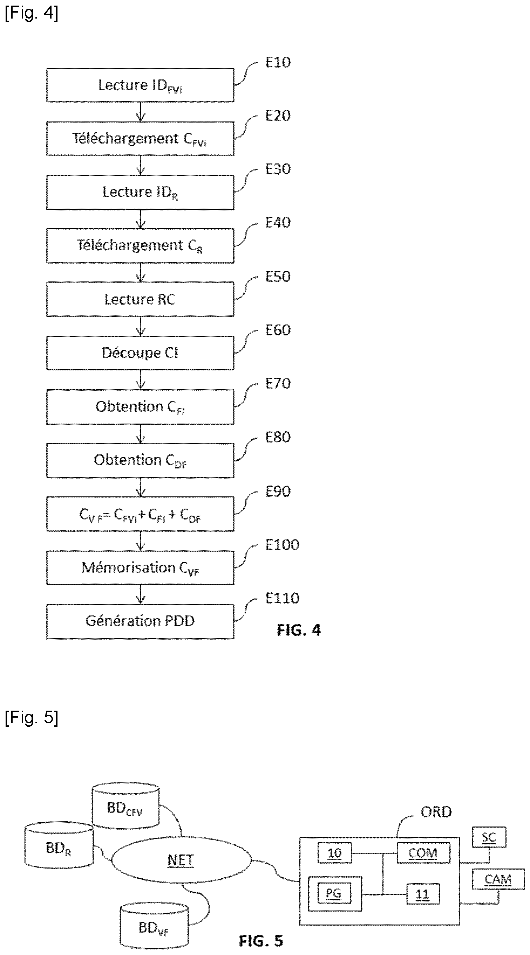

La figure 4 représente sous forme d'organigramme les principales étapes d'un procédé de génération d'un plan de découpe d'un produit verrier complexe VF.

Dans cet exemple, le procédé est décrit pour la génération d'un plan de découpe optimisé du verre feuilleté VF de la figure 1.

Dans le mode de réalisation décrit ici, ce procédé comporte une étape E10 de lecture de l'identifiant unique ID_{FVi}, ID_{FVj} de chacune des deux feuilles de verre FVi, FVj et une étape E20 de téléchargement des cartographies C_{FVi}, C_{FVj} des défauts de chacune de ces feuilles de verre depuis la base de données BD_{CFV} en utilisant leurs identifiants.

Dans le mode de réalisation décrit ici, le procédé selon l'invention comporte une étape E30 de lecture de l'identifiant unique ID_{R} du rouleau R et une étape E40 de téléchargement de la cartographie C_{R} des défauts du rouleau à partir de la base de données BD_{CR}.

Dans le mode de réalisation décrit ici, pour découper (étape E60) une couche intercalaire en matière plastique PVB d'une dimension sensiblement égale à celle des feuilles de verre FVᵢ, FVⱼ, on déroule le rouleau R, ce qui a pour effet d'entraîner la roue codeuse RC.

Dans le mode de réalisation décrit ici, une cartographie C_{FI} des défauts de la couche intercalaire est obtenue au cours d'une étape E70 à partir de la carte des défauts C_{R} du rouleau et d'informations lues de la roue codeuse RC (étape E50).

Les feuilles de verres et la couche intercalaire sont assemblées au cours d'une étape E75 pour former le verre feuilleté VF.

A l'issue de cette étape d'assemblage, le verre feuilleté est analysé et, éventuellement, une cartographie Cordes défauts apparus lors de la fabrication est créée au cours d'une étape E80.

Cette cartographie C_{DF} comporte pour chacun des défauts apparus lors de l'assemblage, une position du défaut dans un repère propre au verre feuilleté VF, une taille du défaut, et un niveau de criticité dudit défaut. Un exemple d'une telle cartographie est donnée à la figure 2C. Cette cartographie C_{DF} comporte pour chacun des défauts apparus lors de l'assemblage, une position POS du défaut dans un repère propre à cette feuille de verre, une taille TAILLE du défaut, et un niveau de criticité NC dudit défaut.

Dans le mode de réalisation décrit ici, le procédé selon l'invention comporte une étape E90 de génération d'une cartographie C_{VF} du verre feuilleté VF par combinaison de la cartographie C_{FVi}, C_{FVj} des défauts de chacune des feuilles de verre, de la cartographie C_{FI} des défauts de la couche intercalaire PVB et de cartographie C_{R} des défauts apparus lors de l'assemblage. De manière connue, cette étape impose une opération de recalage des repères associés à chacune des cartographies.

Dans le mode de réalisation décrit ici, le procédé selon l'invention comporte une étape E100 de mémorisation de la cartographie C_{VF} du produit verrier complexe (ici du verre feuilleté VF) dans une base de données BF_{VF} du réseau. Un exemple d'une telle cartographie est représentée à la figure 2D. Cette cartographie C_{VF} comporte pour chacun des défauts du produit verrier, une position POS du défaut dans un repère propre à ce produit verrier une taille TAILLE du défaut, et un niveau de criticité NC dudit défaut. Elle est remarquable en ce qu'elle comporte en outre pour chaque défaut, un attribut ATT indiquant si le défaut est un défaut d'une feuille de verre, un défaut de la couche intercalaire PVB ou un défaut apparu lors de l'assemblage.

Dans le mode de réalisation décrit ici, le procédé selon l'invention comporte une étape E110 de génération d'un plan de découpe PDD du produit verrier complexe VF à partir de la cartographie C_{VF} du produit verrier complexe et d'un cahier des charges CDC.

Ce cahier des charges prend en compte les niveaux de criticité de chacun des défauts pour découper des morceaux de verre feuilleté de façon à minimiser les pertes de non qualité.

Conformément à l'invention aucun trait de découpe de ce plan de découpe ne passe par une zone d'exclusion d'un défaut de la feuille d'une feuille de verre. Dans le mode de réalisation décrit ici, ces zones d'exclusion sont des cercles de 1cm de rayon autour des défauts.

Le procédé selon l'invention est remarquable en ce qu'il autorise qu'au moins un trait de découpe du plan de découpe passe par une zone d'exclusion d'un défaut de la couche intercalaire PVB ou par une zone d'exclusion d'un défaut apparu lors de l'assemblage.

La figure 5 représente un système SGPD de génération d'un plan de découpe conforme à l'invention. Ce système comporte un ordinateur ORD comportant un processeur 10, une mémoire vive 11, une mémoire morte 12, et un module de communication COM sur un réseau NET

La mémoire morte 12 constitue un support conforme à l'invention. Elle mémorise un programme d'ordinateur PG conforme à l'invention dont les instructions, lorsqu'elles sont exécutées par le processeur 10 mettent en oeuvre les étapes du procédé de génération du plan de découpe décrites précédemment en référence à la figure 4.

Cet ordinateur est connecté à des scanners SC configurés pour lire les identifiants des feuilles de verre et du rouleau. Il est également connecté à une caméra CAM pour détecter d'éventuels défauts apparus lors de la fabrication du produit verrier complexe.

Le module de communication COM permettent à cet ordinateur de télécharger les différentes cartographies de défaut à partir des bases de données BDVF (cartographie des défauts des feuilles de verre) et BDR (cartographie des défauts de rouleau).

Ce module de communication COM permet également de mémoriser la cartographie C_{VF} du produit verrier complexe dans la base de données BD_{VF}.

## Revendications

1. Procédé de génération d'un plan de découpe d'un produit verrier complexe (VF) comportant au moins une feuille de verre (FV) et au moins une couche (FI) autre qu'une feuille de verre, ce procédé comportant :
- une étape (E20) d'obtention d'une cartographie (C_{FV}) des défauts de ladite au moins une feuille de verre (FV);
- une étape (E40) d'obtention d'au moins une autre cartographie (C_{FI}, C_{DF}) de défauts, les défauts de ladite au moins une autre cartographie n'étant pas des défauts d'une feuille de verre ;
chacune desdites cartographies (C_{FV}, C_{FI}, C_{DF}) comportant pour chacun de ses défauts, une position dudit défaut, une taille dudit défaut, et un niveau de criticité dudit défaut ;
- une étape (E110) de génération d'un plan de découpe (PDD) dudit produit verrier complexe (VF) au moins à partir desdites cartographies (C_{FV}, C_{FI}, C_{DF}) et d'un cahier des charges (CDC) prenant en compte lesdits niveaux de criticité, ledit plan de découpe (PDD) comportant au moins un trait de découpe et étant tel qu'aucun desdits traits de découpe ne passe par une zone d'exclusion d'un dit défaut de ladite au moins une feuille de verre (FV),
ledit procédé étant **caractérisé en ce qu'**il autorise qu'au moins un desdits traits de découpe passe par une zone d'exclusion d'un défaut de ladite autre cartographie (C_{FI}, C_{DF}).

2. Procédé selon la revendication 1, **caractérisé en ce que** les défauts de ladite au moins une autre cartographie (C_{FI}, C_{DF}) sont :
- des défauts de ladite au moins une couche ; ou
- des défauts apparus lors de la fabrication dudit produit verrier complexe.

3. Procédé selon la revendication 1 ou 2, **caractérisé en ce que** ledit plan de découpe est généré (E110) à partir d'une cartographie (C_{VF}) dudit produit verrier complexe obtenue (E90) par combinaison de ladite cartographie (C_{FV}) des défauts de ladite au moins une feuille de verre et de ladite autre cartographie (C_{FI}, C_{DF}), ladite cartographie (C_{VF}) comportant pour chaque défaut, un attribut indiquant si le défaut est un défaut d'une feuille de verre, un défaut de ladite au moins une couche ou un défaut apparu lors de l'assemblage.

4. Procédé selon la revendication 3 **caractérisé en ce qu'**il comporte une étape (E100) de mémorisation de ladite cartographie (CVF) dudit produit verrier complexe dans un réseau.

5. Procédé selon l'une quelconque des revendications 1 à 4 **caractérisé en ce que** ladite au moins une couche est une couche mince.

6. Procédé selon l'une quelconque des revendications 1 à 4 **caractérisé en ce que** ledit produit verrier complexe (VF) comporte au moins deux feuilles de verre (FV) et **en ce que** ladite au moins une couche est une couche intercalaire (CI) entre les deux dites couches de verre, par exemple en matière plastique, par exemple en butyral de polyvinyle.

7. Procédé selon la revendication 6, **caractérisé en ce qu'**il comporte :
- une étape (E60) de découpe d'un rouleau pour obtenir ladite couche intercalaire ;
ladite cartographie (C_{FI}) des défauts de ladite couche intercalaire étant obtenue (E40) à partir d'une cartographie (C_{R}) des défauts dudit rouleau.

8. Procédé selon la revendication 7 **caractérisé en ce qu'**il comporte :
- une étape (E30) de lecture d'un identifiant unique dudit rouleau (ID_{R}) ; et
- une étape (E40) de téléchargement de ladite cartographie (C_{FI}) des défauts du rouleau à partir d'une base de données indexée par ledit identifiant (C_{FI}).

9. Procédé selon l'une quelconque des revendications 1 à 8 **caractérisé en ce qu'**il comporte :
- une étape (E10) de lecture d'un identifiant unique (ID_{FV}) de ladite au moins une feuille de verre (FV) ; et
- une étape (E20) de téléchargement de ladite cartographie (C_{FV}) des défauts de ladite au moins une feuille de verre à partir d'une base de données indexée par ledit identifiant unique (ID_{FV}).

10. Procédé selon la revendication 7 à 9 **caractérisé en ce que** ledit rouleau comporte des moyens de repérage (RC) aptes à permettre la détermination de la longueur d'une couche intercalaire déroulée à partir dudit rouleau et **en ce qu'**il comporte :
- une étape (E50) de lecture desdits moyens de repérage pour dérouler le rouleau de manière à découper ladite couche intercalaire (FI) selon une longueur déterminée ;
ladite cartographie (C_{FI}) des défauts de ladite couche intercalaire étant obtenue (E40) à partir de la carte des défauts (C_{R}) dudit rouleau et desdits moyens de repérage (RC).

11. Procédé selon la revendication 7 à 10 **caractérisé en ce que** ledit rouleau comporte un marquage le long d'un bord de chute dudit rouleau, et **en ce qu'**il comporte :
- une étape de lecture dudit marquage ;
- une étape de recalage d'un repère de ladite cartographie des défauts de ladite au moins une feuille de verre et de ladite cartographie des défauts de ladite au moins une couche en utilisant ledit marquage.

12. Système (SGPD) de génération d'un plan de découpe d'un produit verrier complexe comportant au moins une feuille de verre et au moins une couche autre qu'une feuille de verre, ce système comportant :
- un module d'obtention d'une cartographie des défauts de ladite au moins une feuille de verre;
- un module d'obtention d'au moins une autre cartographie de défauts, les défauts de ladite au moins une autre cartographie n'étant pas des défauts d'une feuille de verre ;
chacune desdites cartographies comportant pour chacun de ses défauts de ladite cartographie, une position dudit défaut, une taille dudit défaut, et un niveau de criticité dudit défaut ;
- un module de génération d'un plan de découpe dudit produit verrier complexe au moins à partir desdites cartographies et d'un cahier des charges prenant en compte lesdits niveaux de criticité, ledit plan de découpe comportant au moins un trait de découpe et étant tel qu'aucun desdits traits de découpe ne passe par une zone d'exclusion d'un dit défaut de ladite au moins une feuille de verre,
ledit système étant **caractérisé en ce que** ledit module de génération autorise qu'au moins un desdits traits de découpe passe par une zone d'exclusion d'un défaut de ladite autre cartographie.

13. Programme d'ordinateur (PROG) comportant des instructions pour l'exécution des étapes du procédé de génération d'un plan de découpe selon l'une quelconque des revendications 1 à 11 lorsque ledit programme est exécuté par un ordinateur (ORD).

14. Support d'enregistrement (12) lisible par un ordinateur (ORD) sur lequel est enregistré un programme d'ordinateur comprenant des instructions pour l'exécution des étapes du procédé de génération d'un plan de découpe selon l'une quelconque des revendications 1 à 11.

## Patentansprüche

1. Verfahren zum Erzeugen eines Schneidplans eines komplexen Glasprodukts (VF), umfassend mindestens eine Glasplatte (FV) und mindestens eine Schicht (FI), die anders als eine Glasplatte ist, das Verfahren umfassend:
- einen Schritt (E20) eines Erhaltens einer Kartographie (C_{FV}) von Fehlern der mindestens einen Glasplatte (FV);
- einen Schritt (E40) des Erhaltens mindestens einer anderen Kartographie (C_{FI}, C_{DF}) von Fehlern, wobei die Fehler der mindestens einen anderen Kartographie nicht die Fehler der Glasplatte sind;
wobei jede der Kartographien (C_{FV}, C_{FI}, C_{DF}) für jeden ihrer Fehler eine Position des Fehlers, eine Größe des Fehlers und einen Grad der Kritikalität des Fehlers umfasst;
- einen Schritt (E110) des Erzeugens eines Schneidplans (PDD) des komplexen Glasprodukts (VF) von mindestens den Kartographien (C_{FV}, C_{FI}, C_{DF}) und dem Pflichtenheft (CDC), welches diese Grade der Kritikalität berücksichtigt, wobei der Schneidplan (PDD) mindestens eine Schnittlinie umfasst und derartig ist, dass keine der Schnittlinien einen Ausschlussbereich eines Fehlers der mindestens einen Glasplatte (FV) durchläuft,
wobei das Verfahren **dadurch gekennzeichnet ist, dass** es mindestens einer der Schnittlinien genehmigt, einen Ausschlussbereich eines Fehlers der anderen Kartographie (C_{FI}, C_{DF}) zu durchlaufen.

2. Verfahren nach Anspruch 1, **dadurch gekennzeichnet, dass** die Fehler der mindestens einen anderen Kartographie (C_{FI}, C_{DF}) sind:
- Fehler der mindestens einen Schicht; oder
- Fehler, die bei der Herstellung des komplexen Glasprodukts aufgetreten sind.

3. Verfahren nach Anspruch 1 oder 2, **dadurch gekennzeichnet, dass** der Schneidplan von einer Kartographie (C_{FV}) des komplexen Glasprodukts erzeugt wird (E110), das durch Kombinieren der Kartographie (C_{FV}) von Fehlern der mindestens eine Glasplatte und der anderen Kartographie (C_{FI}, C_{DF}) erhalten wird (E90), wobei die Kartographie (CFV) für jeden Fehler ein Attribut umfasst, das angibt, ob der Fehler ein Fehler einer Glasplatte, ein Fehler der mindestens eine Schicht oder ein Fehler ist, der beim Zusammenbau aufgetreten ist.

4. Verfahren nach Anspruch 3, **dadurch gekennzeichnet, dass** es einen Schritt (E100) eines Speicherns der Kartographie (CVF) des komplexen Glasprodukts in einem Netz umfasst.

5. Verfahren nach einem der Ansprüche 1 bis 4,
**dadurch gekennzeichnet, dass** die mindestens eine Schicht eine Dünnschicht ist.

6. Verfahren nach einem der Ansprüche 1 bis 4,
**dadurch gekennzeichnet, dass** das komplexe Glasprodukt (VF) mindestens zwei Glasplatten (FV) umfasst und dass die mindestens eine Schicht eine Zwischenschicht (Cl) zwischen den zwei Glasschichten ist, zum Beispiel aus Kunststoffmaterial, zum Beispiel aus Polyvinylbutyral.

7. Verfahren nach Anspruch 6, **dadurch gekennzeichnet, dass** es umfasst:
- einen Schritt (E60) des Schneidens einer Rolle, um die Zwischenschicht zu erhalten;
wobei die Kartographie (C_{FI}) von Fehlern der Zwischenschicht von einer Kartographie (Cr) von Fehlern der Rolle erhalten wurde (E40).

8. Verfahren nach Anspruch 7, **dadurch gekennzeichnet, dass** es umfasst:
- einen Schritt (E30) eines Auslesens einer eindeutigen Kennung der Rolle (ID_{R}); und
- einen Schritt (E40) eines Herunterladens der Kartographie (C_{FI}) von Fehlern der Rolle von Basisdaten, die durch die Kennung (C_{FI}) _{INDEXIERT SIND}.

9. Verfahren nach einem der Ansprüche 1 bis 8,
**dadurch gekennzeichnet, dass** es umfasst:
- einen Schritt (E10) des Auslesens einer eindeutigen Kennung (ID_{FV}) der mindestens einen Glasplatte (FV); und
- einen Schritt (E20) des Herunterladens der Kartographie (C_{FV}) von Fehlern von der mindestens einen Glasplatte von Basisdaten, die durch die eindeutige Kennung (ID_{FV}) indexiert sind.

10. Verfahren nach Anspruch 7 bis 9, **dadurch gekennzeichnet, dass** die Rolle Kennzeichnungsmittel (RC) umfasst, die geeignet sind, die Bestimmung der Länge einer Zwischenschicht zu ermöglichen, die von der Rolle abgerollt wird, und dass es umfasst:
- einen Schritt (E50) des Auslesens dieser Kennzeichnungsmittel, um die Rolle derart abzurollen, dass die Zwischenschicht (FI) gemäß einer bestimmten Länge geschnitten wird;
wobei die Kartographie (C_{FI}) von Fehlern der Zwischenschicht von einer Karte von Fehlern (Cr) der Rolle und der Kennzeichnungsmittel (RC) erhalten wurde (E40).

11. Verfahren nach Anspruch 7 bis 10, **dadurch gekennzeichnet, dass** die Rolle eine Markierung der Länge einer Fallkante der Rolle umfasst und dass es umfasst:
- einen Schritt des Auslesens der Markierung;
- einen Schritt des Einstellens des Bezugspunkts der Kartographie von Fehlern der mindestens einen Glasplatte und der Kartographie von Fehlern der mindestens einen Schicht, unter Verwendung der Markierung.

12. System (SGPD) zum Erzeugen eines Schneidplans eines komplexen Glasprodukts, umfassend mindestens eine Glasplatte und mindestens eine Schicht, die anders als eine Glasplatte ist, das System umfassend:
- ein Modul des Erhaltens einer Kartographie von Fehlern der mindestens einen Glasplatte;
- ein Modul des Erhaltens mindestens einer anderen Kartographie von Fehlern, wobei die Fehler der mindestens einen anderen Kartographie nicht die Fehler einer Glasplatte sind;
wobei jede der Kartographien für jeden ihrer Fehler der Kartographie eine Position des Fehlers eine Größe des Fehlers und einen Grad der Kritikalität des Fehlers umfasst;
- ein Modul der Erzeugung eines Schneidplans des komplexen Glasprodukts von mindestens den Kartographien und eines Pflichtenhefts, welches diese Grade der Kritikalität berücksichtigt, wobei der Schneidplan mindestens eine Schnittlinie umfasst und derartig ist, dass keine der Schnittlinien einen Ausschlussbereich eines Fehlers der mindestens einen Glasplatte durchläuft,
wobei das System **dadurch gekennzeichnet ist, dass** das Modul der Erzeugung mindestens einer der Schnittlinien genehmigt, einen Ausschlussbereich eines Fehlers der anderen Kartographie zu durchlaufen.

13. Computerprogramm (PROG), umfassend Anweisungen zur Durchführung der Schritte des Verfahrens zum Erzeugen eines Schneidplans nach einem der Ansprüche 1 bis 11, wenn das Programm von einem Computer (ORD) durchgeführt wird.

14. Speichermedium (12), von einem Computer (ORD) lesbar, auf dem ein Computerprogramm gespeichert ist, das Anweisungen zur Durchführung der Schritte des Verfahrens zum Erzeugen eines Schneidplans nach einem der Ansprüche 1 bis 11 aufweist.

## Claims

1. A method for generating a cutting plan of a complex glazing product (VF) comprising at least one glass sheet (FV) and at least one layer (FI) other than a glass sheet, this method comprising:
- a step (E20) of obtaining a map (C_{FV}) of the defects of said at least one glass sheet (FV);
- a step (E40) of obtaining at least one other defect map (C_{FI}, C_{DF}), the defects of said at least one other map not being defects of a glass sheet;
each of said maps (C_{FV}, C_{FI}, C_{DF}) comprising, for each of its defects, a position of said defect, a size of said defect, and a criticality level of said defect;
- a step (E110) of generating a cutting plan (PDD) of said complex glazing product (VF) at least using said maps (C_{FV}, C_{FI}, C_{DF}) and using a specification (CDC) taking into account said criticality levels, said cutting plan (PDD) comprising at least one cutting line and being such that none of said cutting lines passes through an exclusion zone of a said defect of said at least one glass sheet (FV),
said method being **characterized in that** it permits at least one of said cutting lines to pass through an exclusion zone of a defect of said other map (C_{FI}, C_{DF}).

2. The method as claimed in claim 1, **characterized in that** the defects of said at least one other map (C_{FI}, C_{DF}) are:
- defects of said at least one layer; or
- defects that appeared during the manufacture of said complex glazing product.

3. The method as claimed in claim 1 or 2, **characterized in that** said cutting plan is generated (E110) using a map (C_{VF}) of said complex glazing product, which map is obtained (E90) by combining said map (C_{FV}) of the defects of said at least one glass sheet and said other map (C_{FI}, C_{DF}), said map (C_{VF}) comprising, for each defect, an attribute indicating whether the defect is a defect of a glass sheet, a defect of said at least one layer or a defect that appeared during assembly.

4. The method as claimed in claim 3, **characterized in that** it comprises a step (E100) of storing said map (C_{VF}) of said complex glazing product in memory over a network.

5. The method as claimed in any one of claims 1 to 4, **characterized in that** said at least one layer is a thin layer.

6. The method as claimed in any one of claims 1 to 4, **characterized in that** said complex glazing product (VF) comprises at least two glass sheets (FV) and **in that** said at least one layer is an interlayer (CI) between the two said glass layers, for example one made of plastic, polyvinyl butyral for example.

7. The method as claimed in claim 6, **characterized in that** it comprises:
- a step (E60) of cutting a roll to obtain said interlayer;
said map (C_{FI}) of the defects of said interlayer being obtained (E40) using a map (C_{R}) of the defects of said roll.

8. The method as claimed in claim 7, **characterized in that** it comprises:
- a step (E30) of reading a unique identifier (ID_{R}) of said roll; and
- a step (E40) of downloading said map (C_{FI}) of the defects of the roll from a database indexed by said identifier (C_{FI}).

9. The method as claimed in any one of claims 1 to 8, **characterized in that**:
- a step (E10) of reading a unique identifier (ID_{FV}) of said at least one glass sheet (FV); and
- a step (E20) of downloading said map (C_{FV}) of the defects of said at least one glass sheet from a database indexed by said identifier (ID_{FV}).

10. The method as claimed in claim 7 to 9, **characterized in that** said roll comprises locating means (RC) able to allow the length of an interlayer unrolled from said roll to be determined and **in that** it comprises:
- a step (E50) of reading said locating means with a view to unrolling the roll so as to cut said interlayer (FI) to a defined length;
said map (C_{FI}) of the defects of said interlayer being obtained (E40) using the map (C_{R}) of the defects of said roll and using said locating means (RC).

11. The method as claimed in claim 7 to 10, **characterized in that** said roll comprises a marking along a falling edge of said roll, and it that it comprises:
- a step of reading said marking;
- a step of aligning a coordinate system of said map of the defects of said at least one glass sheet and said map of the defects of said at least one layer using said marking.

12. A system (SGPD) for generating a cutting plan of a complex glazing product comprising at least one glass sheet and at least one layer other than a glass sheet, this system comprising:
- a module for obtaining a map of the defects of said at least one glass sheet;
- a module for obtaining at least one other defect map, the defects of said at least one other map not being defects of a glass sheet;
each of said maps comprising, for each of its defects of said map, a position of said defect, a size of said defect, and a criticality level of said defect;
- a module for generating a cutting plan of said complex glazing product at least using said maps and using a specification taking into account said criticality levels, said cutting plan comprising at least one cutting line and being such that none of said cutting lines passes through an exclusion zone of a said defect of said at least one glass sheet,
said system being **characterized in that** said generating module permits at least one of said cutting lines to pass through an exclusion zone of a defect of said other map.

13. A computer program (PROG) containing instructions for executing the steps of the method for generating a cutting plan as claimed in any one of claims 1 to 11 when said program is executed by a computer (ORD).

14. A storage medium (12) that is readable by a computer (ORD), on which is stored a computer program containing instructions for executing the steps of the method for generating a cutting plan as claimed in any one of claims 1 to 11.
